(19) Europäisches Patentamt
European Patent Office
Office européen des brevets

(11) EP 4 518 537 A1

(12) **EUROPEAN PATENT APPLICATION**
published in accordance with Art. 153(4) EPC

(43) Date of publication:
05.03.2025 Bulletin 2025/10

(21) Application number: 23796858.1

(22) Date of filing: 27.04.2023

(51) International Patent Classification (IPC):
H04W 72/25 (2023.01)    H04W 72/21 (2023.01)
H04W 72/232 (2023.01)    H04L 1/18 (2023.01)
H04W 92/18 (2009.01)

(52) Cooperative Patent Classification (CPC):
H04L 1/18; H04W 72/21; H04W 72/232;
H04W 72/25; H04W 92/18

(86) International application number:
PCT/KR2023/005801

(87) International publication number:
WO 2023/211216 (02.11.2023 Gazette 2023/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.04.2022 US 202263335669 P

(71) Applicant: LG Electronics Inc.
Yeongdeungpo-gu
Seoul 07336 (KR)

(72) Inventors:
• LEE, Youngdae
Seoul 06772 (KR)
• LEE, Seungmin
Seoul 06772 (KR)
• KIM, Seonwook
Seoul 06772 (KR)
• YANG, Suckchel
Seoul 06772 (KR)
• SEO, Hanbyul
Seoul 06772 (KR)

(74) Representative: Frenkel, Matthias Alexander
Wuesthoff & Wuesthoff
Patentanwälte und Rechtsanwalt PartG mbB
Schweigerstraße 2
81541 München (DE)

(54) **METHOD AND DEVICE FOR PERFORMING SIDELINK COMMUNICATION IN WIRELESS COMMUNICATION SYSTEM**

(57) A method and a device for performing communication in a wireless communication system are disclosed. A method performed by a first terminal in a wireless communication system, according to one embodiment of the present disclosure, may comprise the steps of: receiving, from a base station, information about one or more CG configurations for sidelink (SL) communication with at least one second terminal; receiving, from the base station, information for activating a specific CG configuration from among the one or more CG configurations, wherein a plurality of SL CG resource sets are configured for the specific CG configuration within one CG period; and performing multi-TB transmission for the at least one second terminal in the plurality of SL CG resource sets. Here, PSFCH resources may be individually allocated for the one CG period for each SL CG resource set included in the plurality of SL CG resource sets.

FIG.12

START

Receive information on one or more CG configurations
for SL communication with second UE from BS — S1210

Receive information for activating a specific CG
configuration among one or more CG configurations
from BS — S1220

Perform multi-TB transmission for second UE
in a plurality of SL CG resource sets — S1230

END

**Description**

[TECHNICAL FIELD]

The present disclosure relates to a wireless communication system, and more particularly, to a method and device for performing sidelink communication in a wireless communication system.

[BACKGROUND]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and device for performing sidelink (SL) communication in a wireless communication system.

A technical object of the present disclosure is to provide a method and device for performing continuous resource allocation for SL transmission and reception based on configured grant (CG).

A technical object of the present disclosure is to provide a method and device for performing continuous TB transmission within a channel occupancy time (COT) period in CG-based SL transmission and reception.

The technical objects to be achieved by the present disclosure are not limited to the above-described technical objects, and other technical problems which are not described herein will be clearly understood by those skilled in the pertinent art from the following description.

[Technical Solution]

A method performed by a first user equipment (UE) in a wireless communication system according to an aspect of the present disclosure may comprise: receiving information on one or more CG (configured grant) configurations for sidelink (SL) communication with at least one second UE from a base station; receiving information for activating a specific CG configuration among the one or more CG configurations from the base station, wherein, for the specific CG configuration, a plurality of SL CG resource sets are configured within one CG period; and performing multi-Transport block (multi-TB) transmission for the at least one second UE in the plurality of SL CG resource sets. Herein, a physical sidelink feedback channel (PSFCH) resource may be respectively allocated for each SL CG resource set included in the plurality of SL CG resource sets for the one CG period.

A method performed by a base station in a wireless communication system according to an additional aspect of the present disclosure may comprise: transmitting information on one or more configured grant (CG) configurations for sidelink (SL) communication between a first UE and at least one second UE to the first UE; transmitting information for activating a specific CG configuration among the one or more CG configurations to the first UE, wherein, for the specific CG configuration, a plurality of SL CG resource sets are configured within one CG period; and receiving HARQ-ACK information for multi-Transport block (multi-TB) transmission between the first UE and the at least one second UE in the plurality of SL CG resource sets from the first UE. Herein, a physical sidelink feedback channel (PSFCH) resource may be respectively allocated for each SL CG resource set included in the plurality of SL CG resource sets for the one CG period.

[Technical Effects]

According to an embodiment of the present disclosure, a method and device for performing sidelink (SL) communication in a wireless communication system may be provided.

According to an embodiment of the present disclosure, a method and device for performing continuous resource allocation for SL transmission and reception based on configured grant (CG) may be provided.

According to an embodiment of the present disclosure, a method and device for performing continuous TB transmission within a channel occupancy time (COT) period in

CG-based SL transmission and reception may be provided.

Effects achievable by the present disclosure are not limited to the above-described effects, and other effects which are not described herein may be clearly understood by those skilled in the pertinent art from the following description.

[BRIEF DESCRIPTION OF THE DRAWINGS]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates a procedure for performing V2X or SL communication according to a transmission mode in a wireless communication system to which the present disclosure can be applied.

FIG. 8 illustrates a cast type for V2X or SL communication in a wireless communication system to which the present disclosure may be applied.

FIG. 9 is a diagram for explaining a signaling procedure between a base station, a transmitting (Tx) UE, a receiving (Rx) UE, and a base station (BS) according to an embodiment of the present disclosure.

FIG. 10 illustrates continuous resource allocation for sidelink established grant according to an embodiment of the present disclosure.

FIG. 11 illustrates PUCCH and CG PSSCH allocation in SL CG resources according to an embodiment of the present disclosure.

FIG. 12 is a diagram illustrating the operation of a first UE for an SL transmission method based on an SL CG resource set according to one embodiment of the present disclosure.

FIG. 13 is a diagram illustrating the operation of a base station for an SL transmission method based on an SL CG resource set according to one embodiment of the present disclosure.

FIG. 14 illustrates a block diagram of a wireless communication device according to one embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc.

between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator

- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

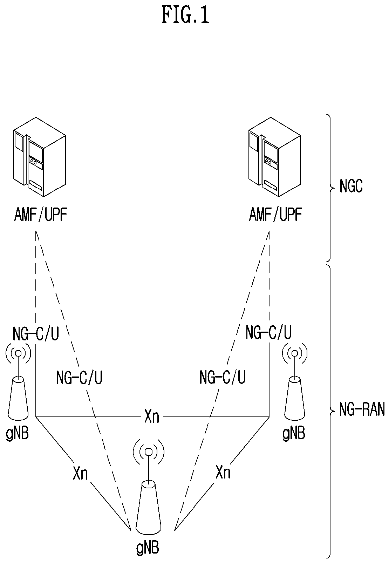

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

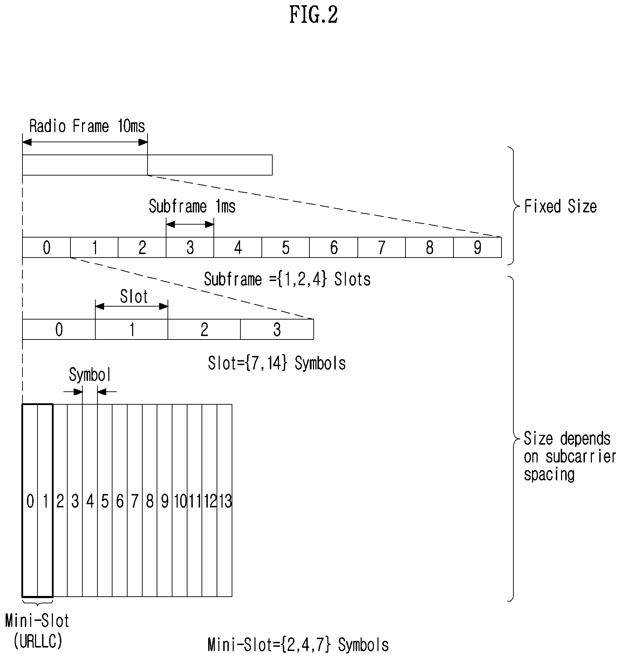

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^\mu \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_1 = 1/(\Delta f_{max} N_f / 100) \cdot T_c = 10$ms. Here, a radio frame is configured with 10 subframes having a duration of $T_{s1} = (\Delta f_{max} N_f / 1000) \cdot T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^\mu \in \{0, ..., N_{slot}^{subframe,\mu} - 1\}$ in a subframe and are numbered in an increasing order of $n_{s,f}^\mu \in \{0, ..., N_{slot}^{frame,\mu} - 1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |

(continued)

| μ | $N_{symb}^{slot}$ | $N_{slot}^{frame,\mu}$ | $N_{slot}^{subframe,\mu}$ |
|---|---|---|---|
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

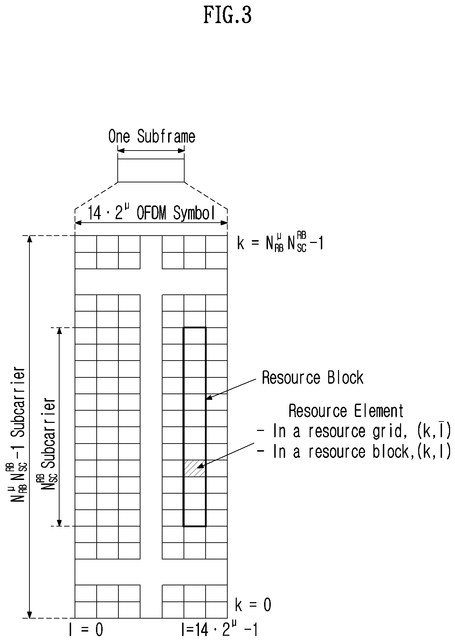

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14·2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu}{\le}N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radio-frequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu}= \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu}=n_{PRB}^{\mu}+N_{BWP,i}^{start,\mu}$$

$N_{BWP,i}^{start,\mu}$ is a common resource block that a BWP starts relatively to common resource block 0.

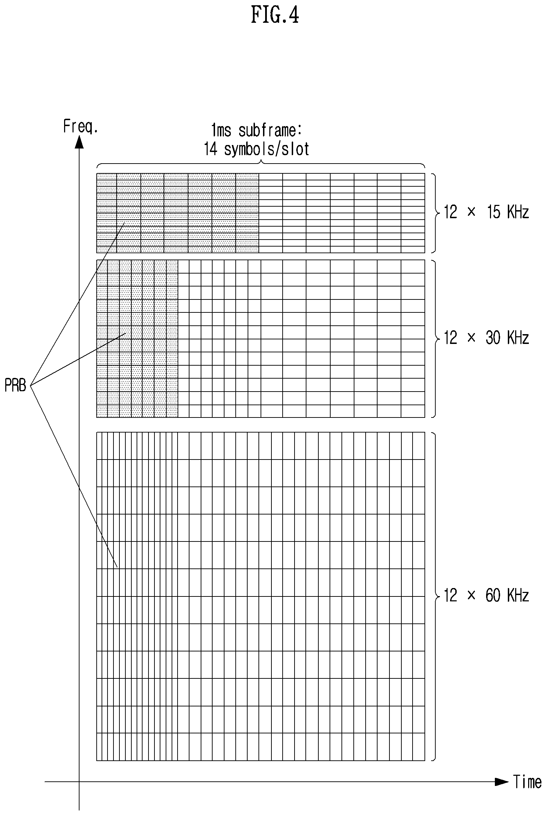

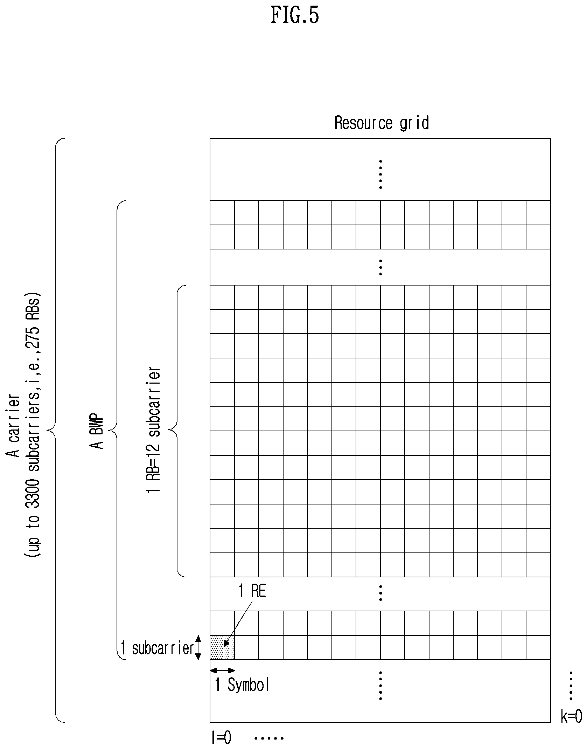

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

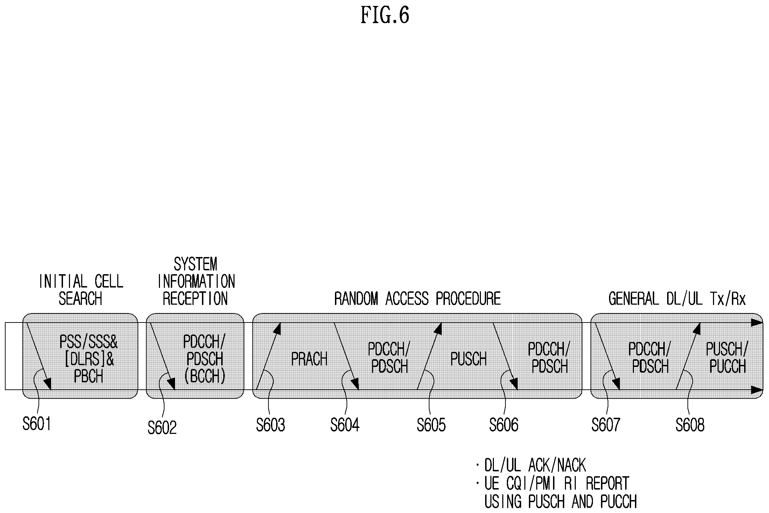

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

V2X (vehicle-to-everything)/side link (SL: sidelink) communication

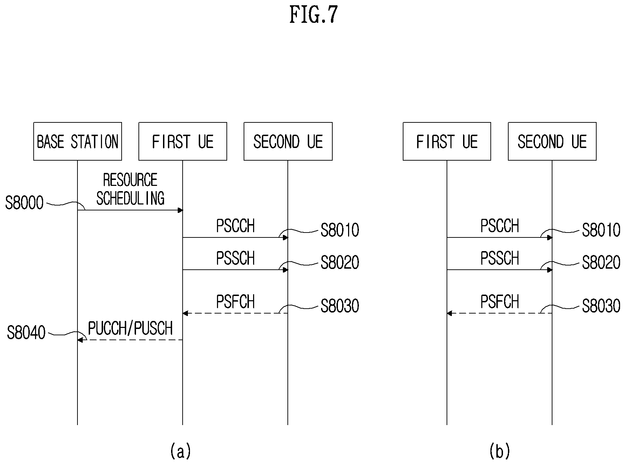

FIG. 7 illustrates a procedure for performing V2X or SL communication according to a transmission mode in a wireless communication system to which the present disclosure may be applied.

The embodiment of FIG. 7 may be combined with various embodiments of the present disclosure. In various embodiments of the present disclosure, the transmission mode may be referred to as a mode or a resource allocation mode. Hereinafter, for convenience of explanation, the transmission mode in LTE may be referred to as an LTE transmission mode, and the transmission mode in NR may be referred to as an NR resource allocation mode.

For example, FIG. 7(a) illustrates the operation of a UE related to LTE transmission mode 1 or LTE transmission mode 3. Alternatively, for example, FIG. 7(a) illustrates the operation of a UE related to NR resource allocation mode 1. For example, LTE transmission mode 1 may be applied to general SL communication, and LTE transmission mode 3 may be applied to V2X communication.

For example, Fig. 7(b) illustrates the operation of a UE associated with LTE transmission mode 2 or LTE transmission mode 4. Alternatively, for example, Fig. 7(b) illustrates the operation of a UE associated with NR resource allocation mode 2.

Referring to FIG. 7(a), in LTE transmission mode 1, LTE transmission mode 3, or NR resource allocation mode 1, the base station may schedule SL resources to be used by the UE for SL transmission (S8000). For example, the base station may transmit information related to SL resources and/or information related to UL resources to the first UE. For example, the UL resources may include PUCCH resources and/or PUSCH resources. For example, the UL resources may be resources for reporting SL HARQ feedback to the base station.

For example, the first UE may receive information related to a dynamic grant (DG) resource and/or information related to a configured grant (CG) resource from the base station. For example, the CG resource may include a CG type 1 resource or a CG type 2 resource. In the present disclosure, the DG resource may be a resource that the base station configures/allocates to the first UE via DCI. In the present disclosure, the CG resource may be a (periodic) resource that the base station configures/allocates to the first UE via DCI and/or an RRC message. For example, in the case of a CG type 1 resource, the base station may transmit an RRC message including information related to the CG resource to the first UE. For example, in the case of a CG type 2 resource, the base station may transmit an RRC message including information related to the CG resource to the first UE, and the base station may transmit DCI related to activation or release of the CG resource to the first UE.

The first UE may transmit PSCCH (e.g., Sidelink Control Information (SCI) or 1st-stage SCI) to the second UE based on the resource scheduling (S8010).

The first UE may transmit a PSSCH (e.g., a 2nd-stage SCI, a MAC protocol data unit (PDU), data, etc.) related to the PSCCH to the second UE (S8020).

The first UE may receive a PSFCH related to the PSCCH/PSSCH from the second UE (S8030). For example, HARQ feedback information (e.g., NACK information or ACK information) can be received from the second UE via the PSFCH.

The first UE may transmit/report HARQ feedback information to the base station via PUCCH or PUSCH (S8040). For example, the HARQ feedback information reported to the base station may be information generated by the first UE based on HARQ feedback information received from the second UE. For example, the HARQ feedback information reported to the base station may be information generated by the first UE based on a rule set in advance. For example, the DCI may be DCI for scheduling of SL. For example, the format of the DCI may be DCI format 3_0 or DCI format 3_1.

Referring to FIG. 7(b), in LTE transmission mode 2, LTE transmission mode 4 or NR resource allocation mode 2, the UE may determine SL transmission resources within SL resources set by the base station/network or preset SL resources. For example, the set SL resources or preconfigured SL resources may be a resource pool. For example, the UE may autonomously select or schedule resources for SL transmission. For example, the UE may perform SL communication by selecting resources by itself within the configured resource pool. For example, the UE may perform sensing and resource (re)selection procedures to select resources by itself within a selection window. For example, the sensing may be performed on a sub-channel basis.

A first UE that has selected a resource within a resource pool may transmit a PSCCH (e.g., SCI or 1st-stage SCI) to a second UE using the resource (S8010).

The first UE may transmit a PSSCH (e.g., 2nd-stage SCI, MAC PDU, data, etc.) related to the PSCCH to the second UE (S8020).

The first UE may receive a PSFCH related to PSCCH/PSSCH from the second UE (S8030).

Referring to FIG. 7(a) or FIG. 7(b), for example, a first UE may transmit an SCI to a second UE on a PSCCH. Or, for example, the first UE may transmit two consecutive SCIs (e.g., 2-stage SCIs) to the second UE on the PSCCH and/or the PSSCH. In this case, the second UE may decode the two consecutive SCIs (e.g., 2-stage SCIs) to receive the PSSCH from the first UE. In the present disclosure, the SCI transmitted on the PSCCH may be referred to as a first (1st) SCI, a first SCI, a first-stage SCI, or a 1st-stage SCI format, and the SCI transmitted on the PSSCH may be referred to as a second (2nd) SCI, a second SCI, a second-stage SCI, or a 2nd-stage SCI format. For example, a 1st-stage SCI format may include SCI format 1-A, and a 2nd-stage SCI format may include SCI format 2-A and/or SCI format 2-B.

Referring to FIG. 7(a) or FIG. 7(b), in step S8030, the first UE may receive the PSFCH based on the description to be described below. For example, the first UE and the second UE may determine the PSFCH resource based on the description to be described below, and the second UE may transmit the HARQ feedback to the first UE using the PSFCH resource.

Describes the UE procedure for reporting HARQ-ACK on sidelink as specified in TS 38.213.

The UE may be indicated to transmit a PSFCH including HARQ-ACK information in response to the PSSCH reception by the SCI format scheduling the PSSCH reception. The UE provides HARQ-ACK information including ACK or NACK or only NACK.

The UE may be provided with a number of slots within the resource pool during a period of PSFCH transmission occasion resources by sl-PSFCH-Period. If the number of slots is 0, the PSFCH transmission of the UE within the resource pool is disabled.

The UE expects that slot $t'^{SL}_k$ ($0 \leq k < T'_{max}$) includes PSFCH transmission occasion resources if $k$ mod $N^{PSFCH}_{PSSCH} = 0$, where $t'^{SL}_k$ is defined in TS 38.214, $T'_{max}$ is the number of slots belonging to the resource pool within 10240 msec according to TS 38.214, and $N^{PSFCH}_{PSSCH}$ is provided by sl-PSFCH-Period.

The UE may be indicated by higher layers not to transmit a PSFCH containing HARQ-ACK information in response to receiving a PSSCH.

When a UE receives a PSSCH from a resource pool and the HARQ feedback enabled/disabled indicator field of the associated SCI format 2-A/2-B/2-C has value 1, the UE provides HARQ-ACK information in a PSFCH transmission from the resource pool. The UE transmits the PSFCH in the first slot that includes PSFCH resources and that corresponds to at least a number of slots provided by sl-MinTimeGapPSFCH of the resource pool after the last slot of the PSSCH reception.

The UE may be provided with a set of $M^{PSFCH}_{PRB,set}$ PRBs in the resource pool for PSFCH transmission including HARQ-ACK information in the physical resource block (PRB) of the resource pool by sl-PSFCH-RB-Set. The UE may be provided with a set of $M^{PSFCH}_{PRB,set}$ PRBs in the resource pool by sl-RB-SetPSFCH for PSFCH transmission including conflict information in the PRB of the resource pool. The UE expects that different PRBs are (pre-)set for conflict information and HARQ-ACK information. For the number of $N_{SUBCH}$ subchannels for the resource pool provided by sl-NumSubchannel and the number of PSSCH slots associated with PSFCH slots less than or equal to $N^{PSFCH}_{PSSCH}$, the UE allocates $[(i+j\ N^{PSFCH}_{PSSCH})\ M^{PSFCH}_{subch,slot}('+i+'1+j\ N^{PSFCH}_{PSSCH})\ M^{PSFCH}_{subch,slot}-1]$ PRBs from $M^{PSFCH}_{PRB,set}$ PRBs among the PSFCH slots and PSSCH slots associated with sub-channel $j$ to slot $i$. Here, $M^{PSFCH}_{subch,slot}=M^{PSFCH}_{PRB,set}/(N_{subch}\ N^{PSFCH}_{PSSCH})$, $0 \leq i < N^{PSFCH}_{PSSCH}$, $0 \leq j < N_{subch}$, and the allocation starts in ascending order of $i$ and continues in ascending order of $j$. The UE expects $M^{PSFCH}_{PRB,set}$ to be a multiple of $N_{subch} \cdot N^{PSFCH}_{PSSCH}$.

The UE determines the number of available PSFCH resources for multiplexing HARQ-ACK or conflict information in PSFCH transmission based on the indication by sl-PSFCH-CandidateResourceType as $R^{PSFCH}_{PRB,CS}=N^{PSFCH}_{type} \cdot M^{PSFCH}_{subch,slot} \cdot N^{PSFCH}_{CS}$, where $N^{PSFCH}_{CS}$ is the number of cyclic shift pairs for the resource pool provided by sl-NumMuxCS-Pair.

- When sl-PSFCH-CandidateResourceType is set to startSubCH, $N^{PSFCH}_{type}=1$, and $M^{PSFCH}_{subch,slot}$ PRBs are associated with the start sub-channel of the corresponding PSSCH.
- When sl-PSFCH-CandidateResourceType is set to allocSubCH, $N^{PSFCH}_{type}=N^{PSSCH}_{subch}$, and $N^{PSSCH}_{subch} \cdot M^{PSFCH}_{subch,slot}$ PRBs are associated with $N^{PSSCH}_{subch}$ subchannels of the corresponding PSSCH.
- For conflict information, the corresponding PSSCH is determined based on sl-PSFCH-Occasion.

PSFCH resources are first indexed from $N^{PSFCH}_{type} \cdot M^{PSFCH}_{subch,slot}$ PRBs in ascending order of PRB index, and then from $N^{PSFCH}_{CS}$ cyclic shift pairs in ascending order of cyclic shift pair index.

The UE determines the index of the PSFCH resource for transmitting the PSFCH including HARQ-ACK information or conflict information in response to the PSSCH reception, which corresponds to the reserved resource, as $(P_{ID}+M_{ID})\ mod\ R^{PSFCH}_{RPRB,CS}$. Here, $P_{ID}$ is a physical layer source identifier provided by SCI format 2-A/2-B/2-C that schedules PSSCH reception or SCI format 2-A/2-B/2-C that reserves resources for conflict information to be provided from other UEs. For HARQ-ACK information, if the UE detects SCI format 2-A having a cast type indicator field value of "01", $M_{ID}$ is an identifier of the UE that receives the PSSCH indicated by the upper layer, otherwise $M_{ID}$ is 0. For conflict information, $M_{ID}$ is 0.

For PSFCH transmission including HARQ-ACK information or conflict information, the UE determines the value $m_0$ from the cyclic shift pair index corresponding to the PSFCH resource index and from $N_{CS}^{PSFCH}$ using Table 6 below to calculate the value $\alpha$ of the cyclic shift.

Table 6 illustrates a set of cyclic shift pairs.

[Table 6]

| $N_{CS}^{PSFCH}$ | $m_0$ | | | | | |
|---|---|---|---|---|---|---|
| | Cyclic shift pair index 0 | Cyclic shift pair index 1 | Cyclic shift pair index 2 | Cyclic shift pair index 3 | Cyclic shift pair index 4 | Cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

For PSFCH transmission including HARQ-ACK information, the UE determines a $m_{cs}$ value as shown in Table 7 below if the UE detects an SCI format 2-A or SCI format 2-C having a cast type indicator field value of "01" or "10" to calculate the value $\alpha$ of the cyclic shift, and determines an $m_{cs}$ value as shown in Table 8 below if the UE detects an SCI format 2-B or 2-A having a cast type indicator field value of "11". For PSFCH transmission including conflict information, the UE determines an $m_{cs}$ value as shown in Table 9 below to calculate the value $\alpha$ of the cyclic shift. The UE applies one cyclic shift from a cyclic shift pair to a sequence used for PSFCH transmission.

Table 7 illustrates the mapping of cyclic shifts of a sequence for PSFCH transmission from a cyclic shift pair and HARQ-ACK information bit values when the HARQ-ACK information includes ACK or NACK.

[Table 7]

| HARQ-ACK value | 0 (NACK) | 1 (ACK) |
|---|---|---|
| Sequency cyclic shift | 0 | 6 |

Table 8 illustrates the mapping of cyclic shifts of a sequence for PSFCH transmission from a cyclic shift pair and HARQ-ACK information bit values when HARQ-ACK information contains only NACK.

[Table 8]

| HARQ-ACK value | 0 (NACK) | 1 (ACK) |
|---|---|---|
| Sequency cyclic shift | 0 | N/A |

Table 9 illustrates the mapping of the cyclic shift of a sequence for PSFCH transmission and the value of the conflict information bit from a cyclic shift pair.

[Table 9]

| Conflict information | Conflict information for the next time-reserved resource within SCI |
|---|---|
| Sequence cyclic shift | 0 |

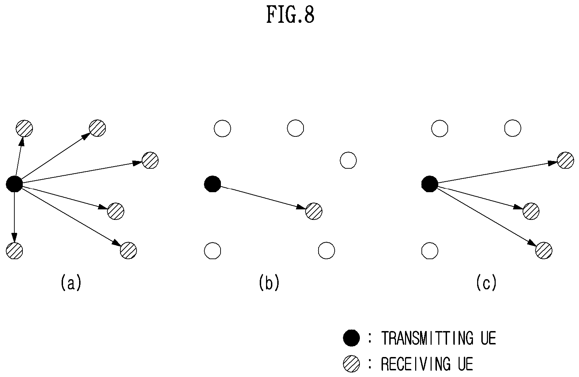

FIG. 8 illustrates a cast type for V2X or SL communication in a wireless communication system to which the present disclosure may be applied.

The embodiment of FIG. 8 may be combined with various embodiments of the present disclosure.

Referring to FIG. 8, FIG. 8(a) represents a broadcast type SL communication, FIG. 8(b) represents a unicast type SL communication, and FIG. 8(c) represents a group-cast type SL communication. In the case of a unicast type SL communication, a UE can perform one-to-one communication with another UE. In the case of a group-cast type SL communication, a UE may perform SL communication with one or more UEs within the group to which it belongs. In various embodiments of the present disclosure, SL group-cast communication may be referred to as SL multicast communication, SL one-to-many communication, etc.

Hereinafter, the HARQ (Hybrid Automatic Repeat Request) procedure is described.

For example, SL HARQ feedback may be enabled for unicast. In this case, in non-Code Block Group (CBG) operation, if a receiving UE decodes a PSCCH targeting the receiving UE and the receiving UE successfully decodes a transport block associated with the PSCCH, the receiving UE may generate an ACK. Then, the receiving UE may transmit the HARQ-ACK to the transmitting UE. On the other hand, if the receiving UE fails to successfully decode a transport block associated with the PSCCH after the receiving UE decodes the PSCCH targeting the receiving UE, the receiving UE may generate a NACK. Then, the receiving UE may transmit the NACK to the transmitting UE.

Also, for example, SL HARQ feedback may be enabled for group-cast. For example, in non-CBG operation, two HARQ feedback options may be supported for group-cast.

(1) group-cast option 1: If the receiving UE fails to decode a transport associated with the PSCCH after the receiving UE decodes the PSCCH targeting the receiving UE, the receiving UE may transmit a NACK to the transmitting UE via the PSFCH. On the other hand, if the receiving UE decodes the PSCCH targeting the receiving UE and the receiving UE successfully decodes the transport block associated with the PSCCH, the receiving UE may not transmit an ACK to the transmitting UE.

(2) Group-cast option 2: If the receiving UE fails to decode a transport block associated with the PSCCH after the receiving UE decodes the PSCCH targeting the receiving UE, the receiving UE may transmit a NACK to the transmitting UE via the PSFCH. Then, if the receiving UE decodes the PSCCH targeting the receiving UE and the receiving UE successfully decodes the transport block associated with the PSCCH, the receiving UE may transmit an ACK to the transmitting UE via the PSFCH.

For example, if group-cast option 1 is used for SL HARQ feedback, all UEs performing group-cast communication may share PSFCH resources. For example, UEs belonging to the same group may transmit HARQ feedback using the same PSFCH resources.

For example, if group-cast option 2 is used for SL HARQ feedback, each UE performing group-cast communication may use different PSFCH resources for HARQ feedback transmission. For example, UEs belonging to the same group may transmit HARQ feedback using different PSFCH resources.

In the present disclosure, ACK may be referred to as HARQ-ACK, ACK information, or positive-ACK information, and NACK may be referred to as HARQ-NACK, NACK information, or negative-ACK information.

Sidelink grants may be semi-persistently configured by RRC or received dynamically on the PDCCH, which is autonomously selected by the MAC entity. The MAC entity may have a sidelink grant on the active SL BWP to determine the set of PSCCH periods in which SCI transmissions occur and the set of PSSCH periods in which SL-SCH transmissions associated with SCI occur.

When the MAC entity is configured to sidelink resource allocation mode 1, the MAC entity may perform actions based on each PDCCH occasion and each grant received for that PDCCH occasion.

<u>Continuous resource allocation method for SL transmission and reception based on configured grant (CG)</u>

NR Unlicensed Spectrum (NR-U) refers to a mode that provides the technology necessary for cellular operators to integrate unlicensed spectrum into their wireless communication systems. NR-U may enable both uplink and downlink operations in unlicensed spectrum.

In NR-U, channel access for uplink and downlink relies on LBT functionality. The UE and/or base station may first sense the communication channel to determine if there is no communication before transmission. If the communication channel is a wideband unlicensed carrier, the channel sensing procedure of NR-U may rely on sensing energy levels in multiple subbands of the communication channel. The base station may configure/provide LBT parameters (e.g., type/period, clear channel evaluation parameters, etc.) to the UE.

In NR-U, a UE may determine when and where to transmit and receive based on an indication of a channel occupancy time (COT) structure. The COT may comprise multiple slots and each slot may comprise downlink resources, uplink resources, or flexible resources.

The NR-U system supports both contiguous and interlaced uplink resource allocations while complying with regulations. In the interlaced uplink resource allocation, the basic unit of resource allocation for the NR unlicensed channels is an interlace. For example, a single interlace may be composed of ten equally spaced resource blocks within a 20MHz frequency bandwidth for 15KHz sub-carrier spacing.

For NR-U, the physical layer may perform an LBT procedure. The LBT procedure is a procedure in which transmission is not performed when the channel is determined to be occupied. If the channel is identified as occupied according to the LBT procedure, transmission may not be performed by the physical layer. If the physical layer performs the LBT procedure before transmission and the transmission is not performed, an LBT failure indication may be transmitted from the physical layer to the MAC entity.

EP 4 518 537 A1

Unless otherwise specified, when LBT procedure is performed for a transmission, action(s) as specified in the present disclosure may be performed regardless of if an LBT failure indication is received from the physical layer. When LBT is not performed by the physical layer, LBT failure indication may not be received from the physical layer.

In relation to the SL transmission and reception content described above in the present disclosure, a UE may allocate a plurality of non-consecutive CG resources in a CG period for SL.

If non-consecutive SL CG transmission is performed within a COT according to the existing SL transmission/-reception method, the SL CG transmission may fail because the UE may not prevent other UEs from accessing the channel.

Therefore, in order to prevent the above-mentioned problem, the present disclosure proposes a method of allocating a plurality of consecutive CG resources within a CG period for SL CG transmission.

The CG period described in the present disclosure means a periodic time interval related to transmission in the CG manner, and one or more transmission occasions (i.e., one or more SL CG resources) may be included within the time interval.

Below, the operation of a UE/base station performing SL CG transmission is described.

A UE may be configured/provided with one or more CGs (i.e., CG scheduling) by a network (e.g., base station).

The CG may be used for uplink (UL) transmission or sidelink (SL) transmission. Additionally, the CG may consist of periodically occurring consecutive transmission occasions.

In one CG period, one or more consecutive resources may be configured for one or more UL/SL transmissions for one or more transport blocks (TBs) (i.e., one or more MAC PDUs).

In this regard, a base station (e.g., gNB) may configure/provide a maximum (or fixed) number of HARQ processes or a maximum (or fixed) number of TBs that may be scheduled for one CG period.

A UE may perform SL transmission for one or more TBs in a CG cycle using the corresponding SL CG after activation of SL CG (i.e., configured SL grant).

At this time, if N consecutive SL CG resources of PSCCH/PSSCH transmission opportunities are allocated, the UE may transmit M TBs in one CG period. Here, each TB may use N/M CG resources (i.e., N/M CG resources) in SL transmission.

For example, for four SL CG resources in a cycle (i.e., CG cycle), two TBs (e.g., TB#1 and TB#2) may be transmitted in one of the following sequences within the same CG cycle.

- Sequence 1. TB#1, TB#2, TB#1, TB#2
- Sequence 2. TB#1, TB#1, TB#2, TB#2

That is, when a plurality of SL CG resources are configured/allocated within one CG cycle, different TBs may be transmitted alternately once (e.g., the sequence 1), or each TB may be transmitted consecutively N/M times (e.g., the sequence 2).

With respect to the above-described example, one or more PSFCH resources may be allocated for each CG period. Here, the PSFCH resource may mean a resource for receiving feedback information (e.g., HARQ-ACK information) for PSSCH transmitted to another UE through the SL CG resource from another UE.

At this time, PSFCH resource(s) may be allocated after all SL CG resources in the same period.

For example, in one CG period, four consecutive SL CG resources are allocated, and the four consecutive SL CG resources may be allocated in the sequence of [TB#1, TB#2, TB#1, TB#2]. Then (i.e., after the four consecutive SL CG resources in the time domain), one or two PSFCHs for TB#1 and TB#2 may be transmitted.

Alternatively, the consecutive SL CG resources may be divided/grouped into one or more SL CG resource sets within one period. Then, the PSFCH resource(s) may be allocated after each SL CG resource set within the same period.

For example, if four consecutive SL CG resources are allocated in one CG period, two SL CG resource sets may be configured, and each SL CG resource set may include two consecutive SL CG resources.

At this time, for (one) CG period, [TB#1, TB#1] in the first SL CG resource set, PSFCH for TB#1, [TB#2, TB#2] in the second SL CG resource set, and PSFCH for TB#2 may be transmitted in time.

Alternatively, for (one) CG period, PSFCHs for [TB#1, TB#2], TB#1 and TB#2 in the first SL CG resource set, PSFCHs for [TB#1, TB#2], and TB#1 and TB#2 in the second SL CG resource set may be transmitted in time.

In the specific examples described above, transmission of TB#1 and TB#2 may be performed by the first UE, and transmission of PSFCH may be performed by the second UE. The second UE may correspond to another UE that received the TB transmitted by the first UE.

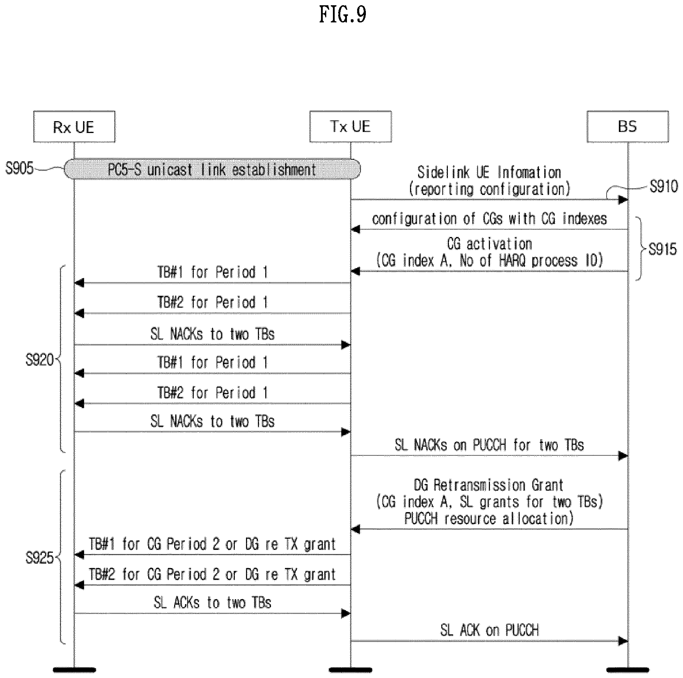

FIG. 9 is a diagram for explaining a signaling procedure between a base station, a transmitting (Tx) UE, a receiving (Rx) UE, and a base station (BS) according to an embodiment of the present disclosure.

Referring to FIG. 9, according to the proposed method in the present disclosure, multi-TB transmission using consecutive SL CG resources may be performed for the same CG period.

The Tx UE may establish a PC5-S unicast link and an associated PC5 RRC connection with the Rx UE (S905).

The Tx UE may transmit sidelink UE information indicating the destination ID of the Rx UE to the base station (i.e., the network) (S910).

A Tx UE may receive configuration information for determining which slot the UE is configured for for a sidelink (SL).

The configuration information may be received via system information or UE-specific signaling.

For example, the configuration information may be TDD-UL-DL-ConfigCommon, which may include reference-SubcarrierSpacing information and TDD-UL-DL-Pattern information.

The information element (IE) TDD-UL-DL-ConfigCommon may determine cell-specific UL/DL TDD configuration and may be constructed as shown in Table 10.

[Table 10]

| TDD-UL-DL-ConfigCommon information element |
| --- |
| TDD-UL-DL-ConfigCommon ::= SEQUENCE { |
| referenceSubcarrierSpacing SubcarrierSpacing, |
| pattern1 TDD-UL-DL-Pattern, |
| pattern2 TDD-UL-DL-Pattern OPTIONAL, -- Need R |
| ... |
| } |
| TDD-UL-DL-Pattern ::= SEQUENCE { |
| dl-UL-TransmissionPeriodicity ENUMERATED {ms0p5, ms0p625, ms1, ms1p25, ms2, ms2p5, ms5, ms10}, |
| nrofDownlinkSlots INTEGER (0..maxNrofSlots), |
| nrofDownlinkSymbols INTEGER (0..maxNrofSymbols-1), |
| nrofUplinkSlots INTEGER (0..maxNrofSlots), |
| nrofUplinkSymbols INTEGER (0..maxNrofSymbols-1), |
| ..., |
| [[ |
| dl-UL-TransmissionPeriodicity-v1530 ENUMERATED {ms3, ms4} OPTIONAL -- Need |
| R |
| ]] |
| } |

Here, the description of the TDD-UL-DL-ConfigCommon field and the TDD-UL-DL-Pattern field is as shown in Table 11 below.

[Table 11]

| **referenceSubcarrierSpacing** |
| --- |
| Reference SCS used to determine the time domain boundaries in the UL-DL pattern which must be common across all subcarrier specific carriers, i.e., independent of the actual subcarrier spacing using for data transmission. Only the values 15, 30 or 60 kHz (FR1), and 60 or 120 kHz (FR2) are applicable. The network configures a not larger than any SCS of configured BWPs in UL, DL and SL for the serving cell and preconfiguration (E.g., refer to TS 38.213, clause 11.1). |
| **dl-UL-TransmissionPeriodicity** |
| Periodicity of the DL-UL pattern (E.g., refer to TS 38.213, clause 11.1). If the dl-UL-TransmissionPeriodicity-v1530 is signalled, UE shall ignore the dl-UL-TransmissionPeriodicity (without suffix). |
| **nrofDownlinkSlots** |
| Number of consecutive full DL slots at the beginning of each DL-UL pattern (E.g., refer to TS 38.213, clause 11.1). The maximum value for this field is 80. |
| **nrofDownlinkSymbols** |
| Number of consecutive DL symbols in the beginning of the slot following the last full DL slot (as derived from nrof-DownlinkSlots). The value 0 indicates that there is no partial-downlink slot (E.g., refer to TS 38.213, clause 11.1). |
| **nrofUplinkSlots** |

(continued)

| Number of consecutive full UL slots at the end of each DL-UL pattern (E.g., refer to TS 38.213, clause 11.1). The maximum value for this field is 80. |
|---|
| **nrofUplinkSymbols**<br>Number of consecutive UL symbols in the end of the slot preceding the first full UL slot (as derived from nrofUplinkSlots). The value 0 indicates that there is no partial-uplink slot (E.g., refer to TS 38.213, clause 11.1). |

Afterwards, the Tx UE may be configured/provided with one or more resource pools and one or more configured grants (CGs) by the base station (S915).

For example, the UE may receive configuration information for one or more CGs based on a CG index, and may receive information for activating a specific CG. Here, the activation for a specific CG may be performed based on the CG index and/or the number of HARQ process IDs.

As a specific example, a CG may be used for uplink or sidelink transmission, and a CG may be configured with periodic transmission occasions.

A sidelink CG (i.e., SL CG) may be associated with a resource pool. Additionally, in a CG cycle, one or more resources may be configured for one or more uplink or sidelink transmissions for a single TB (e.g., MAC PDU). One or more CGs may be mapped to a MAC-CE of a logical channel and a destination ID. Here, the MAC-CE may carry sidelink CSI reports.

In this regard, a PSCCH/PSSCH resource set may occur periodically for each CG. A UE may perform sidelink transmission(s) using the PSCCH/PSSCH set for each CG period.

Referring to FIG. 9, the PSCCH/PSSCH resource set may configure three PSCCH/PSSCH resources for each period of a CG identified by a CG index set to "A". In this case, a UE may perform one transmission for a TB using one PSCCH/PSSCH resource. For each period, one or more TBs may be transmitted in each period.

Through the method described below, a UE (e.g., a Tx UE) may determine an SL resource of an SL grant consisting of a number of logical slots allocated to the corresponding resource pool.

For example, after the SL grant is set for Grant Type 1, the UE needs to sequentially consider that the first slot of the S-th SL grant occurs in the following logical slot.

- [(SFN X numberOfSLSlotsPerFrame) + logical slot number in the frame] = (numberOfSLSlotsPerFrame + sl-TimeOffsetCG-Type1+ S X PeriodicitySL) modulo (1024 × numberOfSLSlotsPerFrame)

Here, PeriodicitySL is ceil (N/20ms X sl_periodCG), N refers to the number of slots that can be used for SL transmsission within either 20ms of TDD-UL-DL-ConfigCommon if TDD-UL-DL-ConfigCommon is configured or 20ms if TDD-UL-DL-ConfigCommon is not configured, and sl-TimeOffsetCG-Type1 and numberOfSLSlotsPerFrame refers to the number of logical slots that can be used for SL transmsission. Additionally, sl-TimeOffsetCG-Type1 rsepresents the offset of the resource for SFN=0 in the time domain.

For example, after the SL grant is set for Grant Type 2, the UE needs to sequentially consider that the first slot of the S-th SL grant occurs in the following logical slot.

- [(SFN X numberOfSLSlotsPerFrame) + logical slot number in the frame] = [(SFNstart time × numberOfSLSlotsPerFrame + slotstart time) + S × PeriodicitySL] modulo (1024 × numberOfSLSlotsPerFrame)s

Here, $SFN_{start\ time}$ and $slot_{start\ time}$ represent the SFN and logical slot, respectively, of the first transmission occasion of the PSSCH in which the SL CG is (re)initialized.

If cg-nrofSlots and cg-nrofPSSCH-InSlot are configured, the UE may consider that additional slot(s) are allocated up to cg-nrofSlots minus one right after the first slot of the S-th sidelink grant for the configured sidelink grant, and more than one PSSCH occasion may be allocated up to cg-nrofPSSCH-InSlot in the first slot and the additional slot(s).

Depending on the SL resource(s) determined as described above, the UE may perform one or more (re)transmissions for the TB stored in the HARQ process during the CG period mapped to a specific HARQ process ID.

Here, the HARQ process may be associated with a HARQ process ID for the UL CG. Additionally, the HARQ process may correspond to a specific SL process associated with a HARQ process ID for the SL CG.

For example, the Tx UE may transmit TB#1 and TB#2 to the Rx UE in CG period 1, and receive SL HARQ-ACK information (e.g., SL NACK value) for the corresponding TBs from the Rx UE. Thereafter, the Tx UE may report the corresponding SL HARQ-ACK information (e.g., SL NACK value) to the base station on PUCCH (S920).

If the base station receives information on the SL NACK value from the Tx UE, the base station may configure/indicate the UE to perform a procedure for TB retransmission (S925).

For example, the base station may transmit a CG grant and/or a DG retransmission grant related to retransmission to the Tx UE. This may be based on a CG index set to "A" and/or an SL grant for two TBs, PUCCH resource allocation, etc. Thereafter, the Tx UE may (re)transmit TB#1 and TB#2 for CG period 2 or the DG retransmission grant. Accordingly, the Tx UE may receive SL HARQ-ACK information (e.g., SL ACK value) for the corresponding TBs from the Rx UE, and may report it to the base station on the PUCCH.

With respect to the operations described based on the procedure of the aforementioned FIG. 9, the UE may perform CG resource allocation and TB transmission based on the following methods in the same CG cycle.

(Method 1)

The method may be for a consecutive PSSCH method in SL-U CG.

For SL CG, a plurality of consecutive PSSCH resources may be allocated within one CG period.

In the existing SL CG scheme (e.g., the SL CG scheme in 3GPP Rel-16), up to three PSCCH/PSSCH occasions may be allocated as PSSCH resources per CG period.

In contrast, in the case of the SL CG method proposed in the present disclosure, up to 7 PSCCH/PSSCH occasions may be allocated as PSSCH resources per CG period, and PSSCH resources may be allocated consecutively within the CG period.

As a specific example, for a specific SL CG configuration index, the SL CG resource configuration may be set/configured as follows.

- timeDomainOffset = 0, periodicity = sym5x14
- cg-nrofSlots-r16 = 3, cg-nrofPSSCH-InSlot-r16 = 2

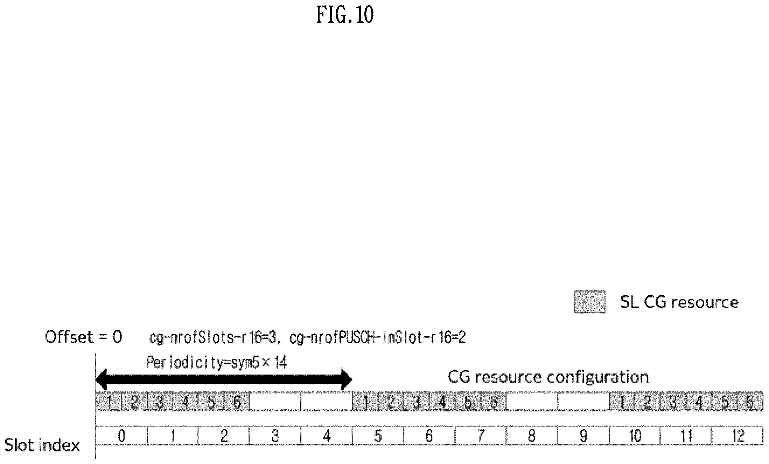

When configured like this, six SL CG resources may be allocated as shown in Fig. 10.

FIG. 10 illustrates continuous resource allocation for sidelink established grant according to an embodiment of the present disclosure.

In Fig. 10, for a plurality of SL CG resources with different numbers, one SL CG resource may comprise a PSCCH resource for transmitting SL control information and a PSSCH resource for transmitting a TB of an SL-SCH.

Additionally, as described above, the proposed method in the present disclosure may allow transmission of more than two TBs per SL CG cycle.

In this regard, the base station may configure a maximum number of TBs and/or a maximum number of HARQ processes per CG period. Alternatively, the base station may configure a fixed number of TBs or a fixed number of HARQ processes per CG period.

In this case, a UE transmitting SL data through SL CG (e.g., Tx UE) may divide SL CG resources into a plurality of SL CG resource sets and allocate PSFCH resources to each SL CG resource set.

For example, in FIG. 10, resources 1, 2, and 3 may be designated as one set (i.e., the first SL CG resource set), and resources 4, 5, and 6 may be designated as another set (i.e., the second SL CG resource set). At this time, PSFCH resources for the first SL CG resource set and PSFCH resources for the second SL CG resource set may be allocated to different slots. As a specific example, PSFCH resources may be allocated immediately after resources of the first SL CG resource set, and PSFCH resources may be allocated immediately after resources of the second SL CG resource set.

Each SL CG resource set is used for the same TB transmission, and different SL CG resource sets may be used for the same/different TB transmission. Here, different TBs may correspond to TBs with different HARQ process IDs or TBs with different destination IDs (i.e., TBs transmitted to different UEs).

Additionally or alternatively, one or more SL HARQ-ACK reports over PUCCH may be allowed.

For example, SL HARQ-ACK information for 2 TBs may be reported in PUCCH corresponding to PUCCH format 0. In this case, only one PUCCH (resource) may be allocated to one period (e.g., SL CG period). Alternatively, a plurality of PUCCH resources may be allocated to one period. In this case, different PUCCH resources may be allocated to the same/different slots for each SL CG resource set.

Additionally or alternatively, for multi-TB transmissions in the same CG period, when allocating retransmission resources via DCI, CG retransmission resources for one or a plurality of TBs may be allocated.

For example, a method may be considered that allows SL retransmission DCI to indicate/give more than one TB retransmission resource. As a specific example, retransmission resources for TB#1 and TB#2 may be allocated simultaneously via DCI format 3_0.

At this time, the base station allocates only one HARQ ID (e.g., HARQ process ID) per CG period via DCI, and may also indicate one HARQ ID for two TBs. Even though the base station allocates a plurality of SL resources using one HARQ ID for one period, the Tx UE may transmit a plurality of TBs allocated to different HARQ processes in the plurality of SL resources to the same/different Rx UEs. Therefore, even if the DCI indicates the HARQ process IDs for a plurality of SL resources with the same value, the SCI transmitted by the Tx UE may indicate different HARQ process IDs for the plurality of SL resources.

For another example, SL retransmission DCI may assign different HARQ IDs to different TBs in the same period, and a method of providing TB-specific SL retransmission DCI for a specific HARQ ID may be considered.

In this regard, the existing HARQ ID calculation formula may be applied to TB#1, and the HARQ ID for TB#2 may be calculated by making the ID value differ by a specific offset compared to the HARQ ID of TB#1. Alternatively, a new HARQ ID calculation formula may be applied to set TB#1 and TB#2 to apply consecutive (or non-consecutive) HARQ ID values.

At this time, the UE needs to perform different TB transmissions on SL CG resource(s) allocated with a different HARQ ID from the base station when transmitting SL.

(Method 2)

The method may be for the PUCCH method in SL-U.

A method of transmitting UE channel occupancy time (COT) to the base station by allocating PUCCH for SL HARQ-ACK purposes adjacent to SL CG resources may be considered.

For example, CG PUSCH and PUCCH may be allocated to be as adjacent as possible, and UE COT may be shared through the PUCCH. At this time, if the adjacent next SL CG resource is not used, the UE may also inform the base station of COT sharing through PUCCH (e.g., SL HARQ ACK reception / last retransmission).

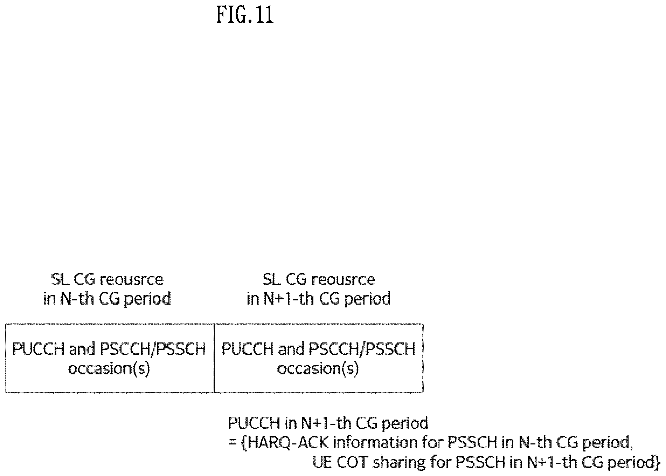

FIG. 11 illustrates PUCCH and CG PSSCH allocation in SL CG resources according to an embodiment of the present disclosure.

Referring to FIG. 11, PUCCH and CG PSSCH may be allocated sequentially for each CG period. Here, the PUCCH of the N+1th period may report SL HARQ-ACK for the CG transmission of the Nth period while also informing UE COT sharing for the N+1th period.

Based on the proposed method in the present disclosure described above, a UE performing SL transmission according to the CG scheme (i.e., a Tx UE) may appropriately determine consecutive SL CG resources, especially when the UE is configured to one or more SL CGs in an unlicenseds band.

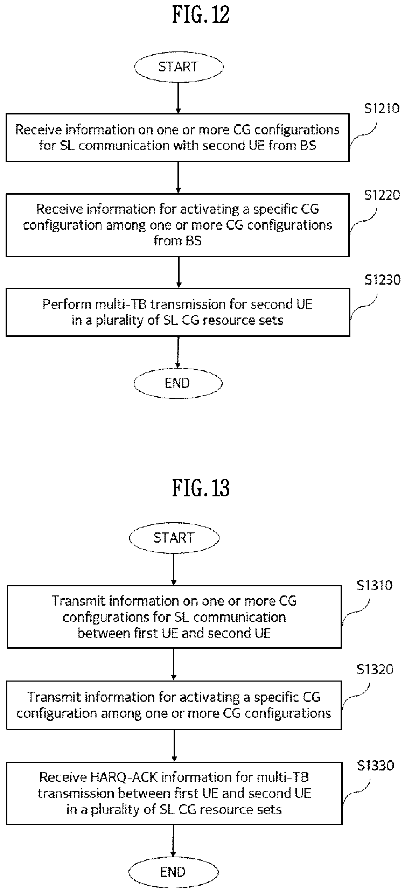

FIG. 12 is a diagram illustrating the operation of a first UE for an SL transmission method based on an SL CG resource set according to one embodiment of the present disclosure.

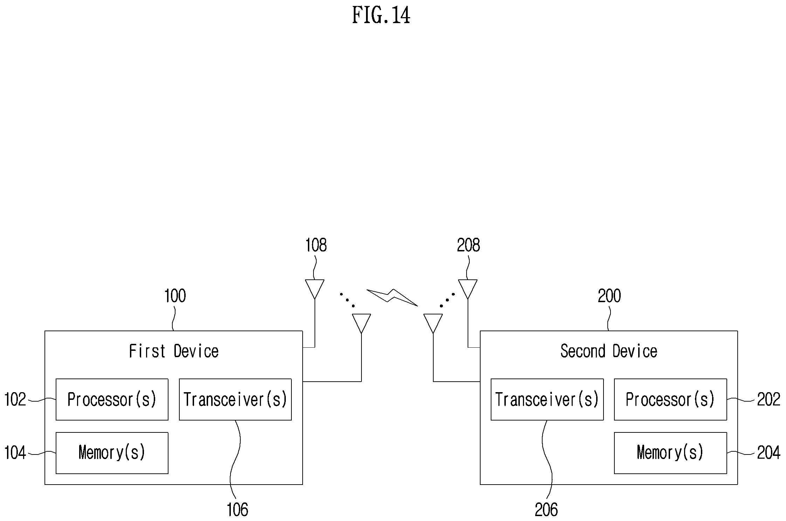

FIG. 12 illustrates an operation of a UE based on a previously proposed method (e.g., one or a combination of the procedure in FIG. 9, method 1 and method 2 and detailed embodiments thereof). The example in FIG. 12 is for convenience of explanation and does not limit the scope of the present disclosure. Some of the step(s) illustrated in FIG. 12 may be omitted depending on the situation and/or setting. In addition, the UE in FIG. 12 is only an example and may be implemented as a device illustrated in FIG. 14 below. For example, the processor (102/202) of FIG. 14 may control the transceiver (106/206) to transmit and receive channels/signals/data/information, etc. (e.g., RRC signaling, MAC CE, DCI for UL/DL scheduling, SRS, PDCCH, PDSCH, PUSCH, PUCCH, etc.), and may also control the processor to store transmitted or received channels/signals/data/information, etc. in the memory (104/204).

Referring to FIG. 12, at step S1210, a first UE may receive (configuration) information on one or more CG configurations for SL communication with at least one second UE from a base station.

For example, the first UE may be configured/provided configurations for SL CG from the base station.

The information may include information on the (maximum/fixed) number of TBs and/or the (maximum/fixed) number of HARQ processes in a CG period.

At step S1220, the first UE may receive information from the base station for activating a specific CG configuration among one or more CG configurations.

For example, the information may include an index for a specific CG configuration, a HARQ process ID, etc.

Here, for the specific CG configuration, a plurality of SL CG resource sets may be configured within one CG period. In this regard, the plurality of SL CG resource sets may be configured by the base station (e.g., based on SL mode 1).

For example, each of the SL CG resource sets included in the plurality of SL CG resource sets may include consecutive SL CG resources.

For example, if there are a plurality of consecutive SL CG resources within the one CG period for the specific CG configuration, the plurality of consecutive SL CG resources may be divided into the plurality of SL CG resource sets based on pre-defined rules. At this time, each SL CG resource set included in the plurality of SL CG resource sets may include [the number of consecutive SL CG resources within the CG period/the number of TBs of the multi-TB transmission] consecutive SL CG resources.

In step S1230, the first UE may perform multi-TB transmission for at least one second UE from the plurality of SL CG resource sets. Here, PSFCH resources (i.e., resources for feedback on SL transmission) may be respectively allocated for each SL CG resource set included in the plurality of SL CG resource sets for the one CG period.

For example, different SL CG resource sets included in the pluraliy of SL CG resource sets may be used for transmission of different TBs.

For example, if the plurality of SL CG resource sets include a first SL CG resource set and a second SL resource set, the first PSFCH resource for TB transmission in the first SL CG resource set may be allocated a pre-determined time after the last TB transmission time in the first SL CG resource set (e.g., immediately after the first SL CG resource set). Additionally, the first PSFCH resource for TB transmission in the second SL CG resource set may be allocated a pre-determined time after the last TB transmission time in the second SL CG resource set (e.g., immediately after the second SL CG resource set).

Additionally or alternatively, the first UE may report HARQ-ACK information (i.e., SL HARQ-ACK information received via PSFCH resource) from the second UE to the base station on a plurality of PUCCH resources. Specifically, for each SL CG resource set included in the plurality of SL CG resource sets, PUCCH resources for reporting HARQ-ACK information to the corresponding base station may be configured differently. That is, PUCCH resources for reporting HARQ-ACK information may be configured differently for each SL CG resource set.

Additionally or alternatively, the first UE may receive a DCI (i.e., SL retransmission DCI) from the base station that indicates retransmission for the aforementioned multi-TB transmission. Here, the DCI may include allocation information of retransmission resources for different TBs in the multi-TB transmission. That is, the DCI may simultaneously (together) allocate/indicate retransmission resources for different TB transmissions.

FIG. 13 is a diagram illustrating the operation of a base station for an SL transmission method based on an SL CG resource set according to one embodiment of the present disclosure.

FIG. 13 illustrates an operation of a UE based on a previously proposed method (e.g., one or a combination of the procedure in FIG. 9, method 1 and method 2 and detailed embodiments thereof). The example in FIG. 13 is for convenience of explanation and does not limit the scope of the present disclosure. Some of the step(s) illustrated in FIG. 13 may be omitted depending on the situation and/or setting. In addition, the base station in FIG. 13 is only an example and may be implemented as a device illustrated in FIG. 14 below. For example, the processor (102/202) of FIG. 14 may control the transceiver (106/206) to transmit and receive channels/signals/data/information, etc. (e.g., RRC signaling, MAC CE, DCI for UL/DL scheduling, SRS, PDCCH, PDSCH, PUSCH, PUCCH, etc.), and may also control the processor to store transmitted or received channels/signals/data/information, etc. in the memory (104/204).

Referring to FIG. 13, at step S1310, the base station may transmit information on one or more CG configurations for SL communication between a first UE and at least one second UE to the first UE.

For example, the base station may configure/provide configurations for SL CG to the first UE.

The information may include information on the (maximum/fixed) number of TBs and/or the (maximum/fixed) number of HARQ processes in a CG period.s

At step S1320, the base station may transmit information to the UE for activating a specific CG configuration among one or more CG configurations.

For example, the information may include an index for a specific CG configuration, a HARQ process ID, etc.

Here, for the specific CG configuration, a plurality of SL CG resource sets may be configured within one CG period. In this regard, the plurality of SL CG resource sets may be configured by the base station (e.g., based on SL mode 1).

For example, each of the SL CG resource sets included in the plurality of SL CG resource sets may include consecutive SL CG resources.

For example, if there are a plurality of consecutive SL CG resources within the one CG period for the specific CG configuration, the plurality of consecutive SL CG resources may be divided into the plurality of SL CG resource sets based on pre-defined rules. At this time, each SL CG resource set included in the plurality of SL CG resource sets may include [the number of consecutive SL CG resources within the CG period/the number of TBs of the multi-TB transmission] consecutive SL CG resources.

In step S1330, the base station may receive HARQ-ACK information for multi-TB transmission between the first UE and at least one second UE in the plurality of SL CG resource sets from the first UE.

In this regard, PSFCH resources (i.e., resources for feedback on SL transmission) may be respectively allocated for each SL CG resource set included in the plurality of SL CG resource sets for one CG period.

The detailed description of the SL CG resource set, multi-TB transmission, PSFCH resources, and HARQ-ACK information reporting to the base station is the same as that described with reference to FIG. 12, so redundant description is omitted.

According to the above-described embodiment of the present disclosure, a method and device for performing consecutive resource allocation for SL transmission and reception based on configured grant (CG) may be provided.

Additionally, according to an embodiment of the present disclosure, a method and device for performing consecutive TB transmission within a channel occupancy time (COT) period in CG-based SL transmission and reception may be provided.

Additionally, according to the embodiment of the present disclosure, there is a technical effect that efficient SL CG allocation in SL mode 1 is possible for SL communication in an unlicensed band.

General Device to which the Present Disclosure may be applied

FIG. 14 illustrates a block diagram of a wireless communication device according to an embodiment of the present disclosure.

In reference to FIG. 14, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, the processor 102 may process the information in the memory 104 to generate first information/signal and then transmit a wireless signal including the first information/signal through the transceiver 106. Additionally, the processor 102 may receive a wireless signal including the second information/signal through the transceiver 106 and then store information obtained from signal processing of the second information/signal in the memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a first user equipment (UE) in a wireless communication system, the method comprising:

   receiving information on one or more CG (configured grant) configurations for sidelink (SL) communication with at least one second UE from a base station;
   receiving information for activating a specific CG configuration among the one or more CG configurations from the base station,
   wherein, for the specific CG configuration, a plurality of SL CG resource sets are configured within one CG period; and
   performing multi-Transport block (multi-TB) transmission for the at least one second UE in the plurality of SL CG resource sets,
   wherein a physical sidelink feedback channel (PSFCH) resource is respectively allocated for each SL CG resource set included in the plurality of SL CG resource sets for the one CG period.

2. The method of claim 1,
   wherein different SL CG resource sets included in the plurality of SL CG resource sets are used for transmission of different TBs.

3. The method of claim 1,
   wherein each SL CG resource set included in the plurality of SL CG resource sets includes consecutive SL CG resources.

4. The method of claim 1,
   wherein the plurality of SL CG resource sets are allocated by the base station.

5. The method of claim 1, further comprising:

   receiving downlink control information (DCI) indicating retransmission for the multi-TB transmission from the base station,
   wherein the DCI includes information on allocation of retransmission resources for different TBs in the multi-TB transmission.

6. The method of claim 1, further comprising:

reporting HARQ-ACK information received from at least one second UE to the base station on a plurality of PUCCH resources.

7. The method of claim 6,
wherein a PUCCH resource for reporting the HARQ-ACK information to the base station is configured differently for each SL CG resource set included in the plurality of SL CG resource sets.

8. The method of claim 1,
wherein, based on that a plurality of consecutive SL CG resources exist within the one CG period for the specific CG configuration, the plurality of consecutive SL CG resources are divided into a plurality of SL CG resource sets based on a pre-defined rule.

9. The method of claim 8,
wherein each SL CG resource set included in the plurality of SL CG resource sets includes [a number of the consecutive SL CG resources/a number of TBs of the multi-TB transmission] consecutive SL CG resources.

10. The method of claim 1,
wherein the information includes information on a number of TBs or a number of HARQ processes in the one CG period.

11. The method of claim 1,

wherein, based on the plurality of SL CG resource sets including a first SL CG resource set and a second SL resource set,
a first PSFCH resource for TB transmission on the first SL CG resource set is allocated after a certain time based on a last TB transmission time in the first SL CG resource set, and
a first PSFCH resource for TB transmission in the second SL CG resource set is allocated after a certain time based on a last TB transmission time in the second SL CG resource set.

12. A first user equipment (UE) in a wireless communication system, the first UE comprising:

at least one transceiver; and
at least one processor connected to the at least one transceiver,
wherein the at least one processor is configured to:

receive, through the at least one transceiver, information on one or more CG (configured grant) configurations for sidelink (SL) communication with at least one second UE from a base station;
receive, through the at least one transceiver, information for activating a specific CG configuration among the one or more CG configurations from the base station,
wherein, for the specific CG configuration, a plurality of SL CG resource sets are configured within one CG period; and
perform, through the at least one transceiver, multi-Transport block (multi-TB) transmission for the at least one second UE in the plurality of SL CG resource sets,
wherein a physical sidelink feedback channel (PSFCH) resource is respectively allocated for each SL CG resource set included in the plurality of SL CG resource sets for the one CG period.

13. A method performed by a base station in a wireless communication system, the method comprising:

transmitting information on one or more configured grant (CG) configurations for sidelink (SL) communication between a first UE and at least one second UE to the first UE;
transmitting information for activating a specific CG configuration among the one or more CG configurations to the first UE,
wherein, for the specific CG configuration, a plurality of SL CG resource sets are configured within one CG period;
receiving HARQ-ACK information for multi-Transport block (multi-TB) transmission between the first UE and the at least one second UE in the plurality of SL CG resource sets from the first UE, and
wherein a physical sidelink feedback channel (PSFCH) resource is respectively allocated for each SL CG resource set included in the plurality of SL CG resource sets for the one CG period.

14. A base station in a wireless communication, the base station comprising:

at least one transceiver; and
at least one processor connected to the at least one transceiver,
wherein the at least one processor is configured to:

transmitting, through the at least one processor, information on one or more configured grant (CG) configurations for sidelink (SL) communication between a first UE and at least one second UE to the first UE; transmitting, through the at least one processor, information for activating a specific CG configuration among the one or more CG configurations to the first UE, wherein, for the specific CG configuration, a plurality of SL CG resource sets are configured within one CG period; and receiving, through the at least one processor, HARQ-ACK information for multi-Transport block (multi-TB) transmission between the first UE and the at least one second UE in the plurality of SL CG resource sets from the first UE, wherein a physical sidelink feedback channel (PSFCH) resource is respectively allocated for each SL CG resource set included in the plurality of SL CG resource sets for the one CG period.

15. A processing unit configured to control a user equipment (UE) in a wireless communication system, the processing unit comprising:

at least one processor; and
at least one computer memory operably connected to the at least one processor and storing instructions for performing a method according to any one of Claim 1 to Claim 11 based on being executed by the at least one processor.

16. At least one non-transitory computer-readable medium storing at least one instruction, wherein:
the at least one instruction controls a device to perform a method according to any one of Claim 1 to Claim 11 in a wireless communication system by being executed by at least one processor.

FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends
on subcarrier
spacing

Mini-Slot
(URLLC)

Mini-Slot={2,4,7} Symbols

## FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

# FIG.4

# FIG.5

Resource grid

A carrier
(up to 3300 subcarriers, i.e., 275 RBs)

A BWP

1 RB=12 subcarrier

1 RE

1 subcarrier

1 Symbol

k=0

l=0 ......

# FIG.6

INITIAL CELL SEARCH — PSS/SSS& [DLRS]& PBCH — S601

SYSTEM INFORMATION RECEPTION — PDCCH/ PDSCH (BCCH) — S602

RANDOM ACCESS PROCEDURE

PRACH — S603

PDCCH/ PDSCH — S604

PUSCH — S605

PDCCH/ PDSCH — S606

GENERAL DL/UL Tx/Rx

PDCCH/ PDSCH — S607

PUSCH/ PUCCH — S608

· DL/UL ACK/NACK
· UE CQI/PMI RI REPORT USING PUSCH AND PUCCH

# FIG.7

**(a)**

| BASE STATION | FIRST UE | SECOND UE |

S8000 — RESOURCE SCHEDULING →

PSCCH → S8010

PSSCH → S8020

PSFCH ⟵ S8030

S8040 — PUCCH/PUSCH ⟵

**(b)**

| FIRST UE | SECOND UE |

PSCCH → S8010

PSSCH → S8020

PSFCH ⟵ S8030

FIG.8

(a)　　　　　　　(b)　　　　　　　(c)

● : TRANSMITTING UE
⊘ : RECEIVING UE

EP 4 518 537 A1

# FIG.9

# FIG.10

▦ SL CG resource

Offset = 0    cg-nrofSlots-r16=3, cg-nrofPUSCH-InSlot-r16=2

Periodicity=sym5×14

CG resource configuration

| | 1 | 2 | 3 | 4 | 5 | 6 | | | 1 | 2 | 3 | 4 | 5 | 6 | | | 1 | 2 | 3 | 4 | 5 | 6 |

Slot index

| 0 | 1 | 2 | 3 | 4 | 5 | 6 | 7 | 8 | 9 | 10 | 11 | 12 |

# FIG.11

EP 4 518 537 A1

| SL CG reousrce<br>in N-th CG period | SL CG reousrce<br>in N+1-th CG period |
|---|---|
| PUCCH and PSCCH/PSSCH<br>occasion(s) | PUCCH and PSCCH/PSSCH<br>occasion(s) |

PUCCH in N+1-th CG period
= {HARQ-ACK information for PSSCH in N-th CG period,
          UE COT sharing for PSSCH in N+1-th CG period}

# FIG. 12

START

Receive information on one or more CG configurations
for SL communication with second UE from BS — S1210

Receive information for activating a specific CG
configuration among one or more CG configurations
from BS — S1220

Perform multi-TB transmission for second UE
in a plurality of SL CG resource sets — S1230

END

# FIG. 13

START

Transmit information on one or more CG
configurations for SL communication
between first UE and second UE — S1310

Transmit information for activating a specific CG
configuration among one or more CG configurations — S1320

Receive HARQ-ACK information for multi-TB
transmission between first UE and second UE
in a plurality of SL CG resource sets — S1330

END

EP 4 518 537 A1

# FIG.14

<div style="text-align:center">**INTERNATIONAL SEARCH REPORT**</div>

| International application No. |
| --- |
| **PCT/KR2023/005801** |

| A. | CLASSIFICATION OF SUBJECT MATTER |
| --- | --- |
| | **H04W 72/25**(2023.01)i; **H04W 72/21**(2023.01)i; **H04W 72/232**(2023.01)i; **H04L 1/18**(2006.01)i; **H04W 92/18**(2009.01)i |

According to International Patent Classification (IPC) or to both national classification and IPC

| B. | FIELDS SEARCHED |
| --- | --- |

Minimum documentation searched (classification system followed by classification symbols)

H04W 72/25(2023.01); H04L 1/18(2006.01); H04L 5/00(2006.01); H04W 16/14(2009.01); H04W 4/40(2018.01); H04W 72/04(2009.01); H04W 72/12(2009.01); H04W 76/28(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 사이드링크(SL, sidelink), CG(configured grant), 설정(configuration), 활성화(activation), 주기(period), 자원(resource), 다중 전송 블록(multi-TB, multi-Transport block), PSFCH(physical sidelink feedback channel)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | US 2021-0058907 A1 (QUALCOMM INCORPORATED) 25 February 2021 (2021-02-25)<br>See claims 1 and 9. | 1-16 |
| Y | KR 10-2021-0096298 A (LG ELECTRONICS INC.) 04 August 2021 (2021-08-04)<br>See paragraphs [0242], [0523], [0529] and [0531]. | 1-16 |
| A | WO 2021-063575 A1 (TELEFONAKTIE BOLAGET LM ERICSSON (PUBL)) 08 April 2021 (2021-04-08)<br>See paragraphs [0077]-[0153]; and figures 2A-7. | 1-16 |
| A | US 2022-0070897 A1 (LG ELECTRONICS INC.) 03 March 2022 (2022-03-03)<br>See paragraphs [0059]-[0233]; and figures 1-25. | 1-16 |
| A | ASUSTEK. Remaining issues on resource allocation mode-1 and sidelink procedure. R1-2105740, 3GPP TSG RAN WG1 #105-e. 11 May 2021.<br>See sections 1-3. | 1-16 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 August 2023** | **21 August 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/005801**

| Patent document cited in search report | | | Publication date (day/month/year) | Patent family member(s) | | | Publication date (day/month/year) |
|---|---|---|---|---|---|---|---|
| US | 2021-0058907 | A1 | 25 February 2021 | CN | 114270754 | A | 01 April 2022 |
| | | | | EP | 4018766 | A1 | 29 June 2022 |
| | | | | WO | 2021-040909 | A1 | 04 March 2021 |
| KR | 10-2021-0096298 | A | 04 August 2021 | CN | 113396551 | A | 14 September 2021 |
| | | | | US | 2022-0103292 | A1 | 31 March 2022 |
| | | | | WO | 2020-153709 | A1 | 30 July 2020 |
| WO | 2021-063575 | A1 | 08 April 2021 | BR | 112022006234 | A2 | 21 June 2022 |
| | | | | CN | 114747276 | A | 12 July 2022 |
| | | | | EP | 4042776 | A1 | 17 August 2022 |
| | | | | JP | 2022-550543 | A | 02 December 2022 |
| | | | | US | 2022-0417963 | A1 | 29 December 2022 |
| US | 2022-0070897 | A1 | 03 March 2022 | CN | 113439477 | A | 24 September 2021 |
| | | | | CN | 113439477 | B | 16 June 2023 |
| | | | | EP | 3890427 | A1 | 06 October 2021 |
| | | | | EP | 3890427 | B1 | 19 October 2022 |
| | | | | WO | 2020-167056 | A1 | 20 August 2020 |

Form PCT/ISA/210 (patent family annex) (July 2022)